# EUROPÄISCHE PATENTSCHRIFT

(11) **EP 2 739 456 B1**
(45) Veröffentlichungstag und Bekanntmachung des Hinweises auf die Patenterteilung: **06.03.2019**
(21) Anmeldenummer: 12751255.6
(22) Anmeldetag: 02.08.2012
(51) Int. Cl.: B29C 64/112

(54) **VERFAHREN ZUR HERSTELLUNG EINES DREIDIMENSIONALEN GEGENSTANDES AUS VERFESTIGBAREM MATERIAL SOWIE DAMIT HERGESTELLTER GEGENSTAND**
METHOD FOR PRODUCING A THREE-DIMENSIONAL OBJECT FROM SOLIDIFIABLE MATERIAL AND THE OBJECT PRODUCED THEREBY
PROCÉDÉ DE FABRICATION D'UN OBJET TRIDIMENSIONNEL EN MATIÈRE DURCISSABLE AINSI QU'OBJET FABRIQUÉ AU MOYEN DE CE PROCÉDÉ

(30) Priorität: 04.08.2011 DE 102011109368
(43) Veröffentlichungstag der Anmeldung: 11.06.2014
(73) Patentinhaber: Arburg GmbH + Co KG, 72290 Lossburg (DE)
(72) Erfinder: KRAIBÜHLER, Herbert, 72290 Lossburg (DE); DUFFNER, Eberhard, 72181 Starzach (DE)
(74) Vertreter: Reinhardt, Harry
(86) Internationale Anmeldenummer: PCT/EP2012/003289
(87) Internationale Veröffentlichungsnummer: WO 2013/017278

(56) Entgegenhaltungen:
- WO-A2-2009/013751
- US-A- 5 203 944

## Beschreibung

Die Erfindung betrifft ein Verfahren zur Herstellung eines dreidimensionalen Gegenstandes aus einem verfestigbarem Material nach dem Oberbegriff des Anspruches 1 sowie einen damit hergestellten Gegenstand nach dem Oberbegriff des Anspruches 7.

In der Kunststoffteileherstellung werden durch Spritzgießen oder Extrudieren in großen Losgrößen und Serien Teile unter Verwendung von Formwerkzeugen hergestellt. Der Vorteil insbesondere des Kunststoffspritzgießens beruht insbesondere auf der hochgenauen Herstellung von komplexen Teilgeometrien, wobei die Funktionsvielfalt des Spritzgießverfahrens in optimaler Weise die Anforderungen an eine kostengünstige und wirtschaftliche Produktion von Kunststoffteilen abdeckt. Das Kunststoffspritzgießen kommt jedoch dann an seine Grenzen, wenn nicht miteinander kompatible Materialien verarbeitet werden müssen oder sich insbesondere bei formschlüssigen Verbindungen Probleme mit dem Entformen aus dem Werkzeug ergeben.

Gleichzeitig wächst mehr und mehr der Bedarf nach Kunststoffteilen für Stückzahl eins und kleine Losgrößen, wie z.B. Musterteile mit der Anforderung einer sehr kurzzeitigen Bereitstellung sowie Eigenschaften, die denen von spritzgegossenen Teilen ähnlich sind. Zur Herstellung solcher Teile gibt es Fertigungsverfahren, die weitläufig unter dem Begriff Prototyping und Rapid Manufacturing bekannt sind. Die Herstellung solcher Teile beruht werkzeuglos, d.h. ohne Formwerkzeuge, in den meisten Fällen auf der Erzeugung der Geometrie aus 3D-Daten. Diese Geometrien werden in unterschiedlichster Form durch entsprechende Mittel, wie Aufschmelzen von Pulverschichten durch Wärmeeintrag, z.B. mittels Laser, generative Systeme wie Druckverfahren in unterschiedlicher verbindender Form der Pulverteile oder auch im sogenannten Schmelzstrangverfahren hergestellt. Insbesondere die Pulverfahren kommen jedoch auch dann an ihre Grenzen, wenn mehrere verschiedene Materialkomponenten nebeneinander verarbeitet werden sollen.

Aus der dem Oberbegriff des Anspruches 1 zugrunde liegenden EP 1 886 793 A1 ist eine Vorrichtung bekannt, bei der eine in der Spritzgießtechnik bekannte Plastifiziereinheit an einen unter Druck setzbaren Materialspeicher für die fluide Phase eines Materials angekoppelt wird. Zur Erzeugung eines Gegenstandes auf einem Objektträger wird dieses Material dort über eine Austragsöffnung in Form von Tropfen ausgetragen. Aufgrund der Adhäsionskräfte des Materials sind dafür ein hoher Druck und hohe Schmelztemperaturen für das Material erforderlich, zumal der Tropfen zur Erzielung einer entsprechenden Oberflächenqualität eine Größe von 0,01 bis 0,05 mm³ aufweisen soll. Bereits durch das Austragen der Tropfen werden verschiedene Teile des Gegenstandes aneinandergefügt. Die beim Ausbringen erhaltenen geometrischen Verhältnisse bleiben beim Herstellungsprozess im Wesentlichen erhalten und entsprechen bereits dem Gegenstand. Dort, Absätze (0016) und (0035) wird bereits vorgeschlagen, über mehrere Austragseinheiten verschiedene Materialkomponenten so auszutragen, dass sie sich am Auftreffpunkt mischen, ohne sich zu entmischen. Ziel ist in diesem Fall eine Materialvermischung. Grenzbereiche von unterschiedlichen Werkstoffen oder die Verwendung reaktiver Mehrkomponenten sind damit effizient zu verwirklichen.

Aus der DE 692 06 357 T2 ist ein Lasersinterverfahren bekannt, in dem metallische Pulverschichten durch Wärmeeintrag mittels Laser miteinander verschweißt werden. Die dafür erforderlich Energiezufuhr lässt nach dem Austragen des Materials erst den Gegenstand und seine Geometrie entstehen. Die Materialien werden verschweißt oder legiert. Dies beeinflusst die endgültige Außengeometrie des Gegenstands. Im Verfahren erfolgt ein schichtweiser Aufbau eines Metallteils, indem durch Schweißen selektiv Schichten aufgebaut werden und in der Schicht als quasi zweite Komponente eine sehr spröde Hilfsschicht für den Bauvorgang durch Plasmasprühen aufgebracht wird, die als Stützstruktur für Überhänge als auch zur Verzugsminderung dient. Nach Aufbringen einer Schicht wird diese überfräst, um eine definierte Geometrieebene für die nächste Schicht zu haben. Bei diesem Schweißverfahren können sich legierende Materialien mit einander verschmolzen werden, so dass die Grenzschicht eine Legierung aus beiden Metallen.

Ausgehend von diesem Stand der Technik liegt der vorliegenden Erfindung die Aufgabe zugrunde, ein Verfahren und einen damit hergestellten Gegenstand zur Verfügung zu stellen, bei dem Randbereiche zwischen verschiedenen Materialkomponenten "wie aus einem Stück" auch bei komplexen Geometrien gebildet werden.

Diese Aufgabe wird durch ein Verfahren mit den Merkmalen des Anspruches 1 sowie durch einen nach diesem Verfahren hergestellten Gegenstand mit den Merkmalen des Anspruches 7 gelöst.

Mit dieser Lösung können direkte Randschichtbereiche mit vergleichbarer fester Verbindung untereinander erzeugt werden, wie dies sonst nur bei Verwendung einer Materialkomponente z.B. im Spritzgießprozess möglich ist. In den Übergangsbereichen zwischen verschiedenen Materialkomponenten entstehen in schneller Wechselfolge verschmelzende Randschichten, die grenzenlos ineinander übergehend ein verbindendes Gefüge ausbilden oder bedarfsweise auch Zwischenschichten bilden können, die später als bewegliche Verbindung zu aktivieren sind.

Selbst bei kompatiblen Materialien bildet sich in der Grenzschicht keine Legierung der Kunststoffketten aus. Stattdessen kann eine Van-der-Waals Elektronenbindung der Enden der Kunststoffketten der einzelnen Materialien entstehen. Durch die relativ schlechte Fließfähigkeit der Kunststoffmoleküle erfolgt zudem kein mikroskopisches Vermischen der Moleküle. Die Grenzschicht ist also im Sinne der Kunststofftechnik kein Kompound sondern eine Grenzschicht. Dies gilt umso mehr bei inkompatiblen Materialien, da es dann um "punktmikroskopische Formschlüssigkeit" der Verbindung geht.

Bedarfsweise ist es auch möglich, eine Materialkomponente so einzusetzen, dass sie als eine später nach der Herstellung des Gegenstandes ablösbare Abstützung ausgebildet ist. Dadurch lassen sich am Gegenstand Überhänge problemlos erzeugen, während gleichzeitig durch die Einhaltung von Grenzbereichen oder den Aufbau von Zwischenschichten entsprechende Oberflächen des fertigen Gegenstandes herstellbar sind. Damit können bis herunter zur Stückzahl eins Gegenstände einerseits mit Materialeigenschaften hergestellt werden, die bedarfsweise besser als die von spritzgegossenen Teilen sind, andererseits aber auch so komplexe Geometrien aufweisen, dass sie im Spritzgussverfahren, wenn überhaupt, nur mit großem Aufwand herzustellen sind.

Durch den Einsatz entsprechender Zwischenschichten, die entweder bei Bewegung der angrenzenden Teile lösbar sind und/oder eine Gleitverbindung ausbilden, können auch Gegenstände mit komplexen Geometrien mit Hintergriffen wie z.B. Kardangelenke oder Kugelgelenke nach diesem Verfahren hergestellt werden.

Weitere Vorteile ergeben sich aus den Unteransprüchen der nachfolgenden Beschreibung.

### Kurzbeschreibung der Figuren

Im Folgenden wird die Erfindung anhand von in den Figuren dargestellten Ausführungsbeispielen näher erläutert. Es zeigen:
- Fig. 1: einen aus zwei Materialkomponenten hergestellten Gegenstand mit einem die beiden Materialkomponenten kraftschlüssig verbindenden Randbereich,
- Fig. 2: einen weiteren Gegenstand, hergestellt nach dem erfindungsgemäßen Verfahren, an dem eine zweite Materialkomponente z.B. als Dichtung angeformt ist
- Fig. 3a,3b: ein Kugelgelenk, hergestellt nach dem Verfahren, unmittelbar nach der Herstellung und im Gebrauchszustand nach Nachbehandlung einer Zwischenschicht,
- Fig. 4: eine Vorrichtung zur Herstellung eines Gegenstands mittels mehreren Materialkomponenten.

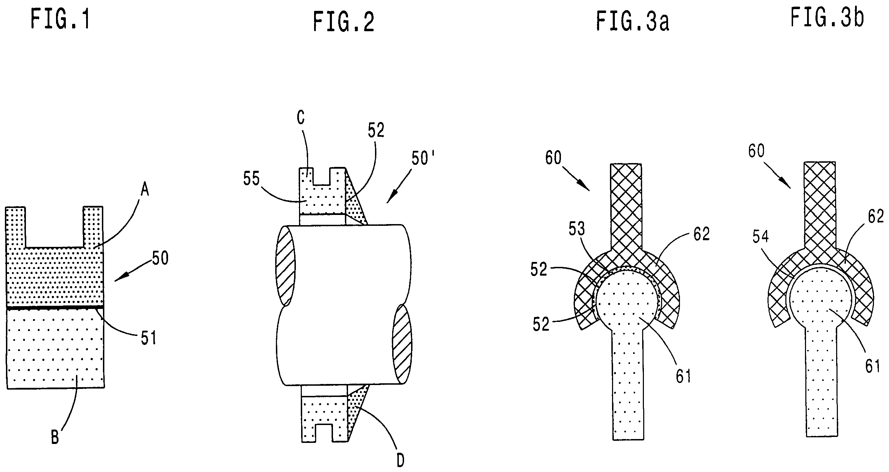

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.
Die Figuren zeigen verschiedene Gegenstände, die verfahrensgemäß hergestellt sind. Das Verfahren dient zur Herstellung eines dreidimensionalen Gegenstandes wie Rapid-Prototyp-Teilen im Mehrkomponentenverfahren, wobei im generativen Aufbau in direkter Aufbaufolge der Gegenstand hergestellt wird. Unter einem generativen Aufbau wird dabei ein allmählicher, das Bauteil erzeugender Aufbau Tropfen für Tropfen eines Gegenstandes verstanden. Unter "direkter Aufbaufolge" wird dabei verstanden, dass Punkt für Punkt der Gegenstand aufgebaut wird, unabhängig davon, welche Materialkomponente gerade ausgebracht werden muss.
Das verfestigbare Material, aus dem der dreidimensionale Gegenstand 50, 50' oder als Gegenstand das Kugelgelenk 60 gemäß Fig. 3a, 3b hergestellt wird, wird verflüssigt.
Das verfestigbare Material ist ein plastifiziertes Material wie z.B. Silikon oder ein plastifizierbares Material wie Kunststoff oder auch pulverförmige Materialien, wobei es im Wesentlichen darauf ankommt, dass das verfestigbare Material entweder im Ausgangszustand in der fluiden Phase verflüssigt wird. Das Material kann auch ein unter Wärme reversibel aufschmelzbares und damit recyclebares Material sein. Grundsätzlich kommen sämtliche Materialien wie Harze, Thermoplaste, Silikone und andere Trägermaterialien in Betracht, die einen generativen Aufbau ermöglichen. Da eine in der Spritzgießtechnik bekannte Plastifiziereinheit zur Aufbereitung des verfestigbaren Materials als plastifiziertes oder plastifizierbares Material verwendet wird, kann ein standardmäßig erhältliches oder beim Spritzgießen vorhandenes Material zur Herstellung der Teile verwendet werden. Ein spezielles Sondermaterial ist damit nicht erforderlich.

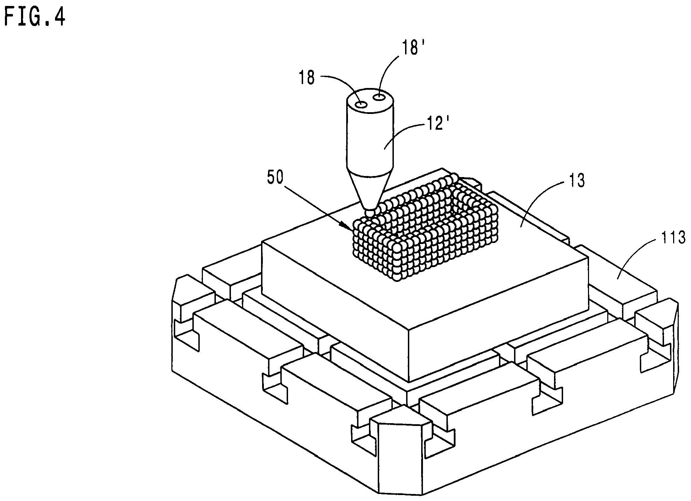

Das Austragen des verfestigbaren Materials erfolgt sequenziell in Form von Tropfen aus einer Austrittsöffnung mindestens einer taktbaren Austragseinheit 12', wie dies z.B. aus der EP 1 886 793 A1 bekannt ist. Mehrere Austragseinheiten, zumindest aber mehrere Materialspeicher sind vorgesehen, die in der direkten Aufbaufolge programmierbar wechselnd Tropfen als kleinste Austragsmenge austragen. Bereits durch das Austragen werden damit verschiedene Teile des Gegenstandes 50, 50' aneinandergefügt. Damit entstehen vorzugsweise bereits beim Ausbringen des Materials bzw. der Tropfen die geometrischen Verhältnisse, die bereits dem Gegenstand 50, 50' entsprechen.
Die Austragseinheit 12' gemäß Fig. 4 ist an sich aus der EP 1 886 793 A1 bekannt und wird hiermit unter Verweisung auf jene Schrift in Bezug genommen. Durch Austragen von Tropfen aus der Austragseinheit 12' wird Schicht für Schicht der Gegenstand 50 auf einem Objektträger 13 erstellt, der auf einem Bautisch 113 in den drei Raumrichtungen bewegbar ist. Bedarfsweise kann über eine Faserzuführeinrichtung kontrolliert über eine Faserkontrolleinrichtung ein Faserelement zusätzlich zugeführt werden, das in das verfestigbare Material am Auftragspunkt eingebettet wird. Die Austragseinheit 12' steht mit einem Materialspeicher 18, 18' je Materialkomponente in Verbindung, dem über eine Druckerzeugungseinheit von einer Aufbereitungseinheit aufbereitetes Material unter Druck stehend zugeführt wird. Über die vorzugsweise taktbare Austrittsöffnung werden die Tropfen erzeugt und in einem Bauraum zum Aufbau des Gegenstandes 50, 50' gefördert. Die Austragseinheit 12' ist Teil einer an sich in der Spritzgießtechnik dem Grundsatz nach bekannten Plastifiziereinheit, die zugleich auch den unter Druck setzbaren Materialspeicher zum Einbringen der fluiden Phase umfasst. Der Druck auf die fluide Phase im Materialspeicher erzeugt in direkter Kopplung den Tropfen.

Mehrere Materialkomponenten A, B bzw. C, D werden mittels mehrere Austragseinheiten 12' zumindest aber aus mehreren Materialspeichern 18, 18' ausgetragen. Die Materialkomponenten bilden jeweils Teile des herzustellenden Gegenstandes 50, 50' aus, wie dies in den Figuren 1, 2 verdeutlicht ist. Da der Aufbau in direkter Aufbaufolge erfolgt, wird bei mehreren Austragseinheiten in beliebiger Folge, also Tröpfchen zu Tröpfchen ein unterschiedliches Material zum Aufbau des Gegenstandes ausgetragen. Dieser Austrag wird programmierbar gewechselt, d.h. abhängig von den Programmvorgaben und damit der Geometrie des Gegenstands werden verschiedene Materialien bis zur kleinsten Austragsmenge eines Tropfens und damit von Tropfen zu Tropfen wechselnd nebeneinander platziert. Damit lassen sich z.B. in Fig. 1 grenzenlos ineinander übergehende, quasi miteinander verschmelzende Randbereiche 51 zwischen den verschiedenen Materialkomponenten A, B ausbilden. Dies führt zu einem verbindenden Gefüge, wie es sonst nur bei Verwendung nur eines Materials oder einer Materialkomponente im Einzelverfahren entsteht. Bezogen auf die Tropfengröße findet so eine Art formschlüssige Verbindung wie z.B. ein Verkrallen statt. Ebenso ist es allerdings auch möglich, gezielt Grenzbereiche 52 zwischen den verschiedenen Materialkomponenten auszubilden. In Fig. 2 ist die Anformung einer Dichtung aus einer z.B. weicheren Materialkomponente D an eine weitere z.B. härtere Materialkomponente C gezeigt. Es können also auch Materialien nebeneinander platziert werden, die aufgrund der Van-der-Waals-Kräfte oder aufgrund reaktiver Eigenschaften sonst nicht miteinander verarbeitet werden können, also nicht kompatibel sind.

Das Ganze lässt sich dadurch realisieren, dass z.B. zwei miteinander synchronisierte Austragseinheiten in beliebiger Folge die Materialkomponenten austragen. Eine Optimierung dieses Vorgangs kann z.B. in der synchronen Herstellung mehrerer Teile in geometrischem Abstand bestehen, bei welchem die Verfahrwege der Austragseinheiten minimiert werden. Grundsätzlich empfiehlt es sich, dass die Austrittsöffnungen der beiden Austragseinheiten bzw. der Materialspeicher 18, 18' dicht beieinander liegen, so dass gegebenenfalls für eine Verfahrbewegung wenig Zeit beim Wechsel der Materialkomponenten vergeht. Damit können im Randbereich in sehr schneller Wechselfolge verschmelzende Randschichten entstehen.

Im Randbereich 51 kann auch eine eine Zwischenschicht 53 bildende Materialkomponente ausgetragen werden, die als lösbare Verbindung zwischen den an die Zwischenschicht 53 angrenzenden Materialien ausgebildet wird. Eine entsprechende Ausgestaltung zeigt Fig. 3a für den Fall der Herstellung eines Kugelgelenks 60. Die Zwischenschicht 53 ist in Fig. 3a noch zu erkennen, während sie in Fig. 3b durch den Spalt 54 ersetzt ist. Das Material der Zwischenschicht 53 kann als das die Teile Kugelkopf 61 und Kugelpfanne 62 verbindende Gefüge eine Gleitverbindung bilden und bedarfsweise auch als Gleitmittel im Kugelgelenk verwendet werden. Damit löst sich bei Bewegung die Zwischenschicht 53 entweder vollständig auf oder verbleibt als Gleitmittel. Hier kann es sinnvoll sein, den Grenzbereich als ein verbindendes Gefüge auszubilden, um das Gleitmittel an Ort und Stelle zu halten. Dies zeigt, welche Möglichkeiten dem Fachmann ganz nach Bedarf mit diesem Verfahren zur Verfügung gestellt werden. Mit diesem Verfahren ist durch die Zwischenschicht ein vorgegebener Abstand oder ein Spiel zwischen den an die Zwischenschicht 53 angrenzenden Teilen des Gegenstands einstellbar, d.h. der Abstand kann programmierbar ggf. sogar von Teil zu Teil verändert werden, was z.B. im Spritzgießverfahren nur äußerst aufwändig möglich ist..

Grundsätzlich wird also mit dem Verfahren ein Gegenstand hergestellt oder kann damit hergestellt werden, bei dem mehrere aneinandergrenzende Teile aus verschiedenen Materialkomponenten vorliegen. Die Teile sind nach der Herstellung durch ein sie verbindendes Gefüge aus verschiedenen Materialkomponenten miteinander verbunden, wobei sich ein Gefüge nahezu wie bei einer Herstellung aus einem Material einstellt. Die Materialkomponente kann jedoch auch so verwendet werden, dass sie als eine nach der Herstellung des Gegenstandes ablösbare Abstützung für die weiteren Materialkomponenten ausgetragen wird. In diesem Fall werden die Grenzbereiche 52 so ausgebildet, dass sich eine möglichst gute Oberflächenqualität des Gegenstandes "hinter" der Abstützung ergibt, wobei diese Geometrie bereits beim Austragen des Materials entsteht. Damit lassen sich auch Überhänge am herzustellenden Gegenstand leicht ausbilden.

Es versteht sich von selbst, dass die Materialkomponenten nicht miteinander kompatibel sein müssen, und dennoch nebeneinander platziert werden können, wie dies z.B. bei entsprechenden Van-der-Waals-Kräften möglich ist. Ein Einsatz ist z.B. auch bei unterschiedlichen Materialeigenschaften möglich, wie z.B. bei einer Verwendung einer im Gebrauchszustand harten Materialkomponente und einer weichen Materialkomponente. Denkbar sind insbesondere die Herstellung von bleibenden Verbindungen, aber auch die Herstellung von Verzahnungen oder anderen kraftschlüssigen und formschlüssigen Verbindungen.

### Bezugszeichenliste

- 12': Austragseinheit
- 13: Objektträger
- 18, 18': Materialspeicher
- 50, 50': Gegenstand
- 51: Randbereich
- 52: Grenzbereich
- 53: Zwischenschicht
- 54: Spalt
- 60: Kugelgelenk
- 61: Kugelkopf
- 62: Kugelpfanne
- 113: Bautisch

- A,B,C,D: Materialkomponenten

## Patentansprüche

1. Verfahren zur Herstellung eines dreidimensionalen Gegenstandes (50, 50') durch generativen Aufbau in direkter Aufbaufolge aus verfestigbarem Material, das verflüssigt werden kann,
wobei mehrere Materialkomponenten (A, B, C, D) in der direkten Aufbaufolge programmierbar wechselnd über mehrere Austragseinheiten (12') unter Druck aus einem Materialspeicher (18, 18') ausgetragen sowie von Tropfen zu Tropfen wechselnd nebeneinander platziert werden und bereits durch das Austragen aneinandergefügt verschiedene Teile des Gegenstandes (50, 50') ausbilden,
wobei die Austragseinheit Teil einer an sich in der Spritzgießtechnik bekannten Plastifiziereinheit ist, die zugleich den unter Druck setzbaren Materialspeicher zum Einbringen der fluiden Phase umfasst, wobei der Druck im Materialspeicher in direkter Kopplung die Tropfen erzeugt,
wobei die beim Ausbringen erhaltenen geometrischen Verhältnisse bereits der Geometrie des Gegenstands (50, 50') im Endzustand entsprechen,
**dadurch gekennzeichnet, dass** die Materialkomponenten (A, B, C, D) untereinander grenzenlos ineinander übergehende, miteinander verschmelzende Randbereiche (51) als verbindendes Gefüge aus verschiedenen Materialkomponenten bilden.

2. Verfahren nach Anspruch1, **dadurch gekennzeichnet, dass** sich die Tropfen formschlüssig miteinander verbinden.

3. Verfahren nach Anspruch 1 oder 2, **dadurch gekennzeichnet, dass** im Randbereich (51) eine eine Zwischenschicht (53) bildende Materialkomponente ausgetragen wird, die als lösbare Verbindung zwischen den an die Zwischenschicht (53) angrenzenden Materialien ausgebildet wird.

4. Verfahren nach Anspruch 3, **dadurch gekennzeichnet, dass** durch die Zwischenschicht (53) ein vorgegebener Abstand oder ein Spiel zwischen den an die Zwischenschicht (53) angrenzenden Teilen des Gegenstands (60) eingestellt wird.

5. Verfahren nach einem der vorhergehenden Ansprüche, **dadurch gekennzeichnet, dass** eine Materialkomponente als eine nach der Herstellung des Gegenstands (60) ablösbare Abstützung für die wenigstens eine weitere Materialkomponente ausgetragen wird.

6. Verfahren nach einem der vorhergehenden Ansprüche, **dadurch gekennzeichnet, dass** Materialkomponenten (A, B, C, D) nebeneinander platziert werden, die aufgrund der Van-der-Waals-Kräfte oder aufgrund reaktiver Eigenschaften sonst nicht miteinander verarbeitbar, also nicht miteinander kompatibel sind.

7. Gegenstand, hergestellt durch ein Verfahren nach einem der vorhergehenden Ansprüche 1 bis 6, mit mehreren aneinander grenzenden Teilen, **dadurch gekennzeichnet, dass** die Teile nach der Herstellung ein sie verbindendes Gefüge aus miteinander verschmolzenen verschiedenen Materialkomponenten (A, B, C, D) aufweisen.

8. Gegenstand nach Anspruch 7, **dadurch gekennzeichnet, dass** das die Teile verbindende Gefüge eine Gleitverbindung bildet oder eine an die Teile angrenzende, bei Bewegung lösbare Zwischenschicht (53) ist.

9. Gegenstand nach Anspruch 8, **dadurch gekennzeichnet, dass** die Zwischenschicht (53) einen vorgegebenen Abstand oder ein Spiel zwischen den an die Zwischenschicht (53) angrenzenden Teilen des Gegenstands (60) bildet.

## Claims

1. Method for producing a three-dimensional object (50, 50') in direct construction sequence by additive construction from solidifiable material which can be liquefied,
wherein in the direct construction sequence multiple material components (A, B, C, D) are alternately discharged in a programmable manner by means of multiple discharge units (12') under pressure from a material storage device (18, 18'), are placed alternately next to one another from drop to drop and configure different parts of the object (50, 50') already joined to one another as a result of the discharge,
wherein the discharge unit is part of a plasticizing unit known per se in injection molding technology, which at the same time comprises the pressurizable material storage device for introducing the fluid phase, wherein the pressure in the material storage device generates the droplets in direct coupling,
wherein the geometric proportions obtained during discharge already correspond to the geometry of the object (50, 50') in the final state,
**characterized in that** the material components (A, B, C, D) form edge regions (51) which merge with one another and melt together without boundaries as a connecting structure of different material components.

2. Method according to claim 1, **characterized in that** the droplets join together in a positive-locking manner.

3. Method according to claim 1 or 2, **characterized in that** a material component forming an intermediate layer (53) is discharged in the edge region (51) and is configured as a releasable connection between the materials adjoining the intermediate layer (53).

4. Method according to claim 3, **characterized in that** a predetermined spacing or a clearance between the parts of the object (60) adjoining the intermediate layer (53) is set by means of the intermediate layer (53).

5. Method according to one of the preceding claims, **characterized in that** a material component is discharged as a support for the at least one further material component, which can be detached after production of the object (60).

6. Method according to one of the preceding claims, **characterized in that** material components (A, B, C, D) are placed side by side, which due to Van der Waals forces or due to reactive properties are otherwise not processable with each other, i.e. not compatible with each other.

7. Object, produced by a method according to one of the preceding claims 1 to 6, comprising multiple adjoining parts, **characterized in that** after production the parts have a structure connecting them consisting of different material components (A, B, C, D) fused together.

8. Object according to claim 7, **characterised in that** the structure connecting the parts forms a sliding connection or is an intermediate layer (53), which adjoins the parts and is detachable upon movement.

9. Object according to claim 8, **characterized in that** the intermediate layer (53) forms a predetermined spacing or a clearance between the parts of the object (60) adjoining the intermediate layer (53).

## Revendications

1. Procédé de fabrication d'un objet tridimensionnel (50, 50') par empilement génératif dans une séquence d'empilements directs d'un matériau durcissable qui peut être fluidifié,
dans lequel plusieurs composants de matériau (A, B, C, D) sont distribués lors de la séquence d'empilements directs de manière programmable en alternance au moyen de plusieurs unités de distribution (12') sous pression à partir d'un réservoir de matériau (18, 18') et placés goutte-à-goutte les uns à côté des autres en alternance et des parties différentes de l'objet (50, 50') jointes les unes aux autres se forment dès la distribution,
dans lequel l'unité de distribution fait partie d'une unité de plastification connue en soi dans la technique du moulage par injection et comprenant également le réservoir de matériau pouvant être mis sous pression pour l'introduction de la phase fluide, la pression dans le réservoir de matériau produisant les gouttes en couplage direct,
dans lequel les rapports géométrique obtenus lors de la distribution correspondent déjà à la géométrie de l'objet (50, 50') à l'état final,
**caractérisé en ce que** les composants de matériau (A, B, C, D) forment entre eux des zones de bord (51) s'interpénétrant entre elles sans limite, fondues ensemble, en tant que structure de liaison constituée des différents composants de matériau.

2. Procédé selon la revendication 1, **caractérisé en ce que** les gouttes se lient solidairement les unes aux autres.

3. Procédé selon la revendication 1 ou 2, **caractérisé en ce que** dans la zone de bord (51), un composant de matériau formant une couche intermédiaire (53) est distribué, lequel est conçu en tant que liaison soluble entre les matériaux contigus à la couche intermédiaire (53).

4. Procédé selon la revendication 3, **caractérisé en ce que**, grâce à la couche intermédiaire (53), une distance prédéterminée ou un jeu est mis(s) en place entre les parties contigües à la couche intermédiaire (53) de l'objet (60).

5. Procédé selon l'une des revendications précédentes, **caractérisé en ce qu'**un composant de matériau est distribué en tant support soluble après la fabrication de l'objet (60) pour le ou les autre(s) composant(s) de matériau.

6. Procédé selon l'une des revendications précédentes, **caractérisé en ce que** sont placés les uns à côté des autres des composants de matériau (A, B, C, D) qui, en raison des liaisons de Van-der-Waals ou en raison de propriétés réactionnelles, ne sont autrement pas utilisables les uns avec les autres, c'est-à-dire non compatibles les uns avec les autres.

7. Objet fabriqué suivant un procédé selon l'un des revendications précédentes 1 à 6, avec plusieurs pièces contigües, **caractérisé en ce que** les parties présentent, après la fabrication, une structure de liaison les liant et constituée de différents composants de matériaux (A, B, C, D) fondus les uns avec les autres.

8. Objet selon la revendication 7, **caractérisé en ce que** la structure de liaison liant les parties forme une liaison glissante ou une couche intermédiaire (53) contigüe aux parties et éliminable par déplacement.

9. Objet selon la revendication 8, **caractérisé en ce que** la couche intermédiaire (53) forme une distance prédéterminée ou un jeu entre les parties de l'objet (60) contigües à la couche intermédiaire (53).
